# EUROPÄISCHE PATENTANMELDUNG

(11) **EP 4 008 476 A1**
(43) Veröffentlichungstag der Anmeldung: **08.06.2022**
(21) Anmeldenummer: 20211907.9
(22) Anmeldetag: 04.12.2020
(51) Int. Cl.: B24B 23/00, B24B 41/00, B23Q 17/12

(54) **VERFAHREN ZUM SCHUTZ EINES ANWENDERS BEI BETRIEB EINER WERKZEUGMASCHINE, SOWIE WERKZEUGMASCHINE**

(71) Anmelder: Hilti Aktiengesellschaft, 9494 Schaan (LI)
(72) Erfinder: Greitmann, Ralf, 86916 Kaufering (DE); Imaschewski, Jens, 82178 Puchheim (DE)
(74) Vertreter: Hilti Aktiengesellschaft Corporate Intellectual Property

(57) **Zusammenfassung**

Die vorliegende Erfindung betrifft ein Verfahren zum Schutz eines Anwenders einer Werkzeugmaschine vor Auswirkungen einer plötzlich auftretenden Unwucht, sowie eine Werkzeugmaschine mit scheibenförmigem Werkzeug zur Ausführung des Verfahrens. Im Kontext der Erfindung wird vorgeschlagen, dass die Werkzeugmaschine mindestens einen Beschleunigungssensor aufweist, der dazu eingerichtet ist, Vibrationen, die beim Betrieb der Werkzeugmaschine auftreten, zu erfassen. Die ermittelten Vibrationswerte können ausgewertet und mit vorgegebenen Grenzwerten verglichen werden, wobei die Werkzeugmaschine abgeschaltet werden kann, wenn die Vibrationswerte einen entsprechenden Grenzwert überschreiten. Durch die Abschaltung der Werkzeugmaschine, die auf verschiedenen Wegen erreicht werden kann, bietet die vorgeschlagene Werkzeugmaschine einen optimalen Anwenderschutz gegenüber den Auswirkungen einer plötzlich auftretenden Unwucht, die beispielsweise bei einem defekten Werkzeug der Werkzeugmaschine auftreten kann.

## Beschreibung

Die vorliegende Erfindung betrifft ein Verfahren zum Schutz eines Anwenders einer Werkzeugmaschine vor Auswirkungen einer plötzlich auftretenden Unwucht, sowie eine Werkzeugmaschine mit scheibenförmigem Werkzeug, wobei mit der Werkzeugmaschine das vorgeschlagene Verfahren ausgeführt werden kann. Im Kontext der Erfindung wird vorgeschlagen, dass die Werkzeugmaschine mindestens einen Beschleunigungssensor aufweist, der dazu eingerichtet ist, Vibrationen, die beim Betrieb der Werkzeugmaschine auftreten, zu erfassen. Die ermittelten Vibrationswerte können ausgewertet und mit vorgegebenen Grenzwerten verglichen werden, wobei die Werkzeugmaschine abgeschaltet werden kann, wenn die Vibrationswerte einen entsprechenden Grenzwert überschreiten. Durch die Abschaltung der Werkzeugmaschine, die auf verschiedenen Wegen erreicht werden kann, bietet die vorgeschlagene Werkzeugmaschine einen optimalen Anwenderschutz gegenüber den Auswirkungen einer plötzlich auftretenden Unwucht, die beispielsweise bei einem defekten Werkzeug der Werkzeugmaschine auftreten kann.

### Hintergrund der Erfindung:

Im Bereich der Werkzeugmaschinen sind Trennschleifer oder Winkelschleifer bekannt, mit denen Schnitte in einen zu bearbeitenden Untergrund eingebracht werden können oder die dazu verwendet werden können, um die Oberfläche eines Untergrundes zu bearbeiten. Solche Trenn- oder Winkelschleifer weisen üblicherweise ein scheibenförmiges Werkzeug auf, das als Trenn- oder Schleifscheibe bezeichnet wird. Der Umfang einer solchen Trenn- oder Schleifscheibe kann bevorzugt symmetrisch angeordnete und ausgestaltete Segmente aufweisen, wobei die Segmente von radial verlaufenden Schlitzen voneinander getrennt sind. Aufgrund ihrer Gestaltung können diese Segmente, insbesondere bei Betrieb eines Trennschleifers, aus der Trennscheibe herausbrechen. Dadurch verliert die Trennscheibe ihre Symmetrie und es können unerwünschte Unwucht-Phänomene auftreten, die die Bedienung des Trennschleifers erschweren oder unmöglich machen können. Das plötzliche Auftreten einer Unwucht kann auch eine Gefahr für den Anwender darstellen, da durch die Unwucht starke Vibrationen auftreten können. Dies kann dazu führen, dass der Anwender die Kontrolle über das Gerät verliert.

Die Aufgabe, die der vorliegenden Erfindung zugrunde liegt, besteht darin, die vorstehend beschriebenen Mängel und Nachteile des Standes der Technik zu überwinden und ein Verfahren zum Schutz eines Anwenders einer Werkzeugmaschine bereitzustellen, mit dem insbesondere die negativen Auswirkungen einer plötzlich auftretenden Unwucht abgemildert bzw. vermieden werden. Insbesondere soll ein Bedienungsrisiko für den Anwender der Werkzeugmaschine verringert und der Betrieb der Werkzeugmaschine sicherer gestaltet werden. Ein weiteres Anliegen der Erfindung ist es, eine Werkzeugmaschine mit einem scheibenförmigen Werkzeug bereitzustellen, mit dem der Anwender besonders sicher arbeiten kann und bei dessen Betrieb der Anwender optimal vor den Auswirkungen einer plötzlich auftretenden Unwucht und den damit gegebenenfalls verbundenen starken Vibrationen geschützt ist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Schutz eines Anwenders einer Werkzeugmaschine vor Auswirkungen einer plötzlich auftretenden Unwucht vorgesehen. Das Verfahren ist durch folgende Verfahrensschritte gekennzeichnet:
a) Bereitstellung einer Werkzeugmaschine mit einem scheibenförmigen Werkzeug, wobei die Werkzeugmaschine mindestens einen Beschleunigungssensor umfasst,
b) Betrieb der Werkzeugmaschine,
c) Erfassung von Vibrationen, die beim Betrieb der Werkzeugmaschine auftreten, mit dem mindestens einen Beschleunigungssensor,
d) Auswertung der unter Verfahrensschritt c) erfassten Vibrationen, wobei die Auswertung einen Vergleich der Vibrationswerte mit einem vorgegebenen Grenzwert für die Vibrationen umfasst,
e) Schutz des Anwenders durch Abschalten der Werkzeugmaschine, wenn die Vibrationswerte den vorgegebenen Grenzwert überschreiten.

Ein Ziel, das mit dem vorgeschlagenen Verfahren zum Anwenderschutz erreicht wird, ist es, die Werkzeugmaschine schnellstmöglich abzuschalten beziehungsweise das Werkzeug von dem Antrieb der Werkzeugmaschine zu trennen, falls eine Unwucht des Werkzeugs ein bestimmtes, vorab als gefährlich definiertes Maß überschreitet. Diese vorab als gefährlich eingestufte Maß kommt durch den vorgegebenen Grenzwert zum Ausdruck, bei dessen Überschreitung die Werkzeugmaschine gemäß dem vorgeschlagenen Verfahren abgeschaltet wird.

In einem zweiten Aspekt betrifft die Erfindung eine Werkzeugmaschine mit einem scheibenförmigen Werkzeug. Die für das Anwenderschutz-Verfahren eingeführten Begriffe, Definitionen und technischen Vorteile gelten für die vorgeschlagene Werkzeugmaschine analog. Die Werkzeugmaschine ist dadurch gekennzeichnet, dass sie mindestens einen Beschleunigungssensor zur Erfassung von Vibrationen, die beim Betrieb der Werkzeugmaschine auftreten, umfasst.

Es ist im Sinne der Erfindung bevorzugt, dass die Werkzeugmaschine ein Trennschleifer ist. Der Trennschleifer kann einen hinteren Bereich umfassen, der von einem Hauptkörper und einem Schutzrahmen gebildet wird. Der Hauptköper des Trennschleifers kann von einem Gehäuse umgeben sein und eine Energieversorgungseinheit, eine Steuereinheit, einen Antrieb bzw. einen Antriebsstrang und/oder einen Motor umfassen. Es ist im Sinne der Erfindung bevorzugt, dass die Werkzeugmaschine einen Akkumulator ("Akku") als Energiequelle umfasst. Der Schutzrahmen kann einen vorderen, umlaufenden Handgriff und einen zweiten, oberen Handgriff umfassen. Der vordere Teil der Werkzeugmaschine wird von seinem Werkzeug gebildet, das insbesondere in dem Fall, dass die Werkzeugmaschine als Trennschleifer ausgebildet ist, ein scheibenförmiges Werkzeug ist. Es kann insbesondere als Trennscheibe bezeichnet werden. Der Umfang der Trennscheibe weist bevorzugt symmetrisch ausgestaltete Segmente auf, wobei die Segmente von radial verlaufenden Schlitzen voneinander getrennt sind. Es ist im Sinne der Erfindung bevorzugt, dass durch den vorderen, von dem Werkzeug gebildeten Bereich der Werkzeugmaschine und durch den hinteren, unter anderem von dem Hauptkörper gebildeten Bereich der Werkzeugmaschine die Raumrichtungen "vorne" und "hinten" festgelegt werden.

Die Werkzeugmaschine umfasst insbesondere einen Trägerarm für das scheibenförmige Werkzeug, an dem der mindestens eine Beschleunigungssensor angeordnet vorliegen kann. Es ist im Sinne der Erfindung bevorzugt, dass der Beschleunigungssensor an einem vorderen Bereich des Trägerarms für das scheibenförmige Werkzeug angeordnet vorliegt. Vorzugsweise kann der bevorzugt im vorderen Bereich des Trägerarms angeordnete Beschleunigungssensor im Sinne der Erfindung als "erster Beschleunigungssensor" bezeichnet werden. Der vordere Bereich des Trägerarms kann insbesondere in räumlicher Nähe zu einem Drehpunkt bzw. einem Rotationszentrum der Trennscheibe vorliegen. Das bedeutet im Sinne der Erfindung bevorzugt, dass der Beschleunigungssensor an einer Spitze des Trägerarms vorliegen kann. Tests haben gezeigt, dass an dieser Position die Vibrationen, die im Kontext der Erfindung erfasst und ausgewertet werden, besonders genau und einfach ermittelt werden können.

Der Trägerarm der Werkzeugmaschine kann auch als Schneidarm bezeichnet werden. Er ist in der Figur ohne Abdeckung dargestellt, um die möglichen Positionen der Beschleunigungssensoren besser darzustellen.

Es ist im Sinne der Erfindung bevorzugt, dass der Beschleunigungssensor so an der Werkzeugmaschine angeordnet vorliegt, dass er die Vibrationen, die beim Betrieb der Werkzeugmaschine auftreten, optimal erfasst. Mit anderen Worten ist der Beschleunigungssensor dazu eingerichtet, die bei Betrieb der Werkzeugmaschine erzeugten Vibrationen zu erfassen, wobei seine Anordnung innerhalb der Werkzeugmaschine für eine optimale Erfassung der Vibrationen sorgt. Tests haben gezeigt, dass die optimale Erfassung der Vibrationen insbesondere dann erfolgen kann, wenn der Beschleunigungssensor an einem vorderen Bereich bzw. im Bereich einer Spitze des Schneidarms für das scheibenförmige Werkzeug angeordnet vorliegt.

Es ist im Sinne der Erfindung bevorzugt, die Vibrationen dauerhaft bzw. kontinuierlich zu erfassen. Vorzugsweise können die Vibrationen in kurzer Abfolge, d.h. mit sehr kurzen Zeitabständen zwischen zwei Messungen, ermittelt werden. Die mit dem Beschleunigungssensor ermittelten Daten können entweder direkt vor Ort, beispielsweise in dem Sensor, informationstechnologisch verarbeitet und/oder ausgewertet werden. Es kann aber im Sinne der Erfindung auch bevorzugt sein, dass die mit dem Beschleunigungssensor ermittelten Vibrationsdaten an eine Steuereinheit der Werkzeugmaschine weitergeleitet werden, wobei eine Verarbeitung und/oder Auswertung der Daten in der Steuereinheit erfolgt. Die Steuereinheit ist vorzugsweise in dem Hauptkörper der Werkzeugmaschine angeordnet. Es ist im Sinne der Erfindung bevorzugt, dass zwischen dem Beschleunigungssensor und der Steuereinheit eine Kommunikationsverbindung besteht, die drahtlos oder drahtbehaftet ausgebildet sein kann.

Die Auswertung der Vibrationsdaten umfasst insbesondere einen Vergleich der mit dem Beschleunigungssensor erfassten Vibrationswerte mit einem vorgegebenen Grenzwert für die Vibrationen. Dieser vorgegebene Grenzwert für die Vibrationen kann in der Werkzeugmaschine oder außerhalb der Werkzeugmaschine hinterlegt sein. Beispielsweise können in der Steuereinheit Lookup-Tabellen hinterlegt sein, aus denen der vorgegebene Grenzwert für die Vibrationen abgeleitet werden kann. Es ist im Sinne der Erfindung bevorzugt, dass der Grenzwert variieren kann, beispielsweise in Abhängigkeit von einem Durchmesser oder einer Drehzahl der Trennscheibe. Es kann im Sinne der Erfindung aber auch bevorzugt sein, dass der vorgegebene Vibrationsgrenzwert außerhalb der Werkzeugmaschine hinterlegt, d.h. beispielsweise auf einem Server oder in einer Daten-Cloud, mit der die Werkzeugmaschine verbunden ist bzw. auf die die Werkzeugmaschine Zugriff hat.

Es ist im Sinne der Erfindung bevorzugt, dass bei dem Vergleich der Vibrationsdaten mit dem vorgegebenen Grenzwert die zuletzt ermittelten, d.h. die noch ganz frischen bzw. aktuellen Daten mit dem Grenzwert verglichen werden. Dabei können die aktuellen Daten beispielsweise über einen kurzen Zeitraum gemittelt werden, um ein fehlerhaftes Abschalten der Werkzeugmaschine bei einem Meßfehler oder einem Daten-Ausreißer zu verhindern. Es ist im Sinne der Erfindung allerdings besonders bevorzugt, dass die Werkzeugmaschine bei Erkennung einer Veränderung in den Vibrationsdaten, die auf ein Ausbrechen eines Segments aus der Trennscheibe hindeutet, besonders schnell handelt bzw. reagiert, indem eine rasche und zügige Abschaltung der Werkzeugmaschine veranlasst wird. Durch ein zügiges Abschalten der Werkzeugmaschine kann ein besonders wirksamer Schutz des Anwenders der Werkzeugmaschine gewährleistet werden, wenn die mit dem Beschleunigungssensor erfassten Vibrationswerte den vorgegebenen Grenzwert überschreiten. Der Begriff «zügiges Abschalten» bedeutet im Sinne der Erfindung bevorzugt, dass das Abschalten beispielsweise in weniger als 5 Sekunden, bevorzugt in weniger als 2 Sekunden erfolgt.

Das Abschalten der Werkzeugmaschine kann im Kontext der vorliegenden Erfindung auf mehrere Weisen erreicht werden. In einer ersten Variante, die insbesondere dann bevorzugt ist, wenn die Werkzeugmaschine ein akkubetriebener Trennschleifer ist, wird das Abschalten der Werkzeugmaschine durch ein Abschalten eines Motors der Werkzeugmaschine bewirkt. Das Abschalten der Werkzeugmaschine, indem der Motor der Werkzeugmaschine abgeschaltet wird, gewährleistet ein besonders schnelles Abschalten der Werkzeugmaschine und dadurch einen wirksamen und zügigen Schutz des Anwenders. Diese erste Variante der Erfindung ist besonders bevorzugt, weil von einer Vorsehung einer (zusätzlichen) mechanischen Bremse am Antriebsstrang oder von einer Vorsehung einer Kupplung zum Abkoppeln der Trennscheibe vom Antrieb der Werkzeugmaschine abgesehen werden kann. Mit anderen Worten ist für ein schnelles Abbremsen des bevorzugt bürstenlosen Motors keine mechanische Bremse oder Kupplung zur Entkopplung von Antrieb und Trennscheibe mehr erforderlich.

Das Abschalten der Werkzeugmaschine kann beispielsweise auch dadurch erreicht werden, dass eine Drehzahl der Trennscheibe in einen unkritischen Bereich abgesenkt wird. Der Begriff "Abschalten eines Motors der Werkzeugmaschine", der die erste Variante für das Abschalten der Werkzeugmaschine beschreibt, umfasst im Sinne der Erfindung vorzugsweise auch ein solches Absenken der Scheibendrehzahl in einen unkritischen Bereich. Mit anderen Worten kann ein Abschalten des Motors der Werkzeugmaschine auch durch eine Absenkung der Scheibendrehzahl erreicht werden. Der Begriff "unkritisch" bedeutet im Sinne der Erfindung, dass die Drehzahl der Trennscheibe soweit reduziert wird, dass beispielsweise die Vibrationen, die durch eine Unwucht entstehen können, auf ein akzeptables Maß reduziert werden und der Nutzer der Werkzeugmaschine gefahrlos und ohne Beeinträchtigungen mit der Werkzeugmaschine weiterarbeiten kann.

Es ist in dieser ersten Variante des Verfahrens bevorzugt, dass der Motor der Werkzeugmaschine ein bürstenloser Motor ist. Dadurch kann die Bremsenergie im Motor der Werkzeugmaschine vernichtet oder in die Akkumulatoren zurückgespeist werden.

In einer zweiten Variante der Erfindung kann das Abschalten der Werkzeugmaschine durch ein Anhalten des scheibenförmigen Werkzeugs der Werkzeugmaschine bewirkt werden. Es ist im Kontext dieser zweiten Abschalt-Variante bevorzugt, dass zum Anhalten des scheibenförmigen Werkzeugs an einem Antriebsstrang der Werkzeugmaschine eine mechanische Bremse vorgesehen ist. Mit anderen Worten kann die Werkzeugmaschine an ihrem Antriebsstrang eine (zusätzliche) mechanische Bremse aufweisen, die dazu eingerichtet ist, die Trennscheibe des Trennschleifers bei Erkennung einer Unwucht, beispielsweise durch ein herausgebrochenes Segment der Trennscheibe, schnell zu stoppen. Es ist im Sinne der Erfindung insbesondere bevorzugt, dass eine schlagartige Veränderung innerhalb der Vibrationsdaten von der Werkzeugmaschine bzw. ihrer Steuereinheit dahingehend verstanden wird, dass diese schlagartige Veränderung der Vibrationsdaten von einer defektbedingten Unwucht der Trennscheibe hervorgerufen wird, wobei auf diese festgestellte Unwucht mit einem Abschalten der Werkzeugmaschine reagiert wird. Es ist im Sinne der Erfindung bevorzugt, dass eine Änderung der Vibrationsdaten durch eine Unwucht des Werkzeugs der Werkzeugmaschine hervorgerufen wird.

In einer dritten Variante der Erfindung kann das Abschalten der Werkzeugmaschine durch eine Entkopplung des scheibenförmigen Werkzeugs von einem Antrieb der Werkzeugmaschine bewirkt werden, wobei zur Entkopplung des scheibenförmigen Werkzeugs eine Kupplung an der Werkzeugmaschine vorgesehen ist. Bei dieser dritten Abschalt-Variante läuft der Motor der Werkzeugmaschine weiter, während die Trennscheibe von dem Antrieb des Trennschleifers abgekoppelt wird, so dass kein Drehmoment mehr auf die Trennscheibe übertragen wird. Dadurch kommt die Rotation der Trennscheibe zum Erliegen und es geht keine weitere Gefahr für den Nutzer von der Trennscheibe aus. Die Entkopplung des Werkzeugs von dem Antrieb der Werkzeugmaschine kann insbesondere zusätzlich zu dem Anhalten des Werkzeugs der Werkzeugmaschine durchgeführt werden. Es ist im Sinne der Erfindung bevorzugt, dass das Abschalten der Werkzeugmaschine mit einer mechanischen Bremse mit einer zusätzlichen Entkopplung des scheibenförmigen Werkzeugs beschleunigt werden kann. Hierzu kann eine Kupplung zwischen dem scheibenförmigen Werkzeug und dem Motor vorgesehen sein. Bei dieser Abschalt-Variante kann der Motor der Werkzeugmaschine weiterlaufen, während die Trennscheibe von dem Antrieb des Trennschleifers abgekoppelt wird, so dass kein Drehmoment mehr auf die Trennscheibe übertragen wird. Dadurch kann die Rotation der Trennscheibe mit reduziertem Aufwand frühzeitig zum Erliegen kommen, so dass keine weitere Gefahr für den Nutzer von der Trennscheibe ausgeht.

Im Kontext der Erfindung wird eine Werkzeugmaschine vorgeschlagen, die insbesondere ein Akku-Trennschleifer mit speziellem Anwenderschutz sein kann. Der Grundgedanke, der der Erfindung zugrunde liegt, besteht insbesondere darin, dass der Trennschleifer schnell abgeschaltet werden kann, falls es beim Schneiden mit dem Trennschleifer zu einer erhöhten Unwucht durch eine defekte Trennscheibe kommt. Wenn eine solche Unwucht einen definierten Wert übersteigt, kann das Gerät schnellstmöglich abgeschaltet werden, um eine mögliche Gefährdung für den Anwender bzw. das Gerät zu verhindern

Zur Umsetzung des Grundgedankens wird vorgeschlagen, bei einem Akku-Trennschleifer mit einem vorzugsweise bürstenlosen Motor mindestens einen Beschleunigungssensor so zu integrieren, dass damit die Vibrationen im Betrieb des Trennschleifers gut erfasst werden können. Mit Hilfe dieses Sensors bzw. dieser Sensoren werden die Vibration des Gerätes vorteilhafterweise dauerhaft gemessen. Steigt die Vibration durch erhöhte Unwucht an der Trennscheibe bzw. am Schneidarm über einen vorab definierten Wert an, wird die Trennscheibe schnellstmöglich abgebremst bzw. der Antrieb entkoppelt, um den Anwender wirksam zu schützen.

Es ist im Sinne der Erfindung bevorzugt, dass die Werkzeugmaschine ein Anzeigemittel aufweist, um einen Anwender der Werkzeugmaschine auf ein Abschalten hinzuweisen. Das Anzeigemittel kann ein Display und/oder lichtemittierende Dioden (LED) umfassen. Vorteilhafterweise kann dem Anwender des Trennschleifers mit einer solchen LED-Anzeige oder einem Display angezeigt werden, dass es zu einer vorsorglichen Abschaltung des Trennschleifers kommt oder kam. Das Anzeigemittel kann insbesondere auf einer Oberseite eines Gehäuses der Werkzeugmaschine angeordnet vorliegen. Diese Anordnung ist besonders vorteilhaft, weil das Anzeigemittel dadurch besonders gut vom Anwender der Werkzeugmaschine eingesehen werden kann. Dadurch erhält der Anwender besonders schnell einen Hinweis auf ein plötzliches Abschalten der Werkzeugmaschine.

Es ist im Sinne der Erfindung bevorzugt, dass die Werkzeugmaschine einen zweiten Beschleunigungssensor zur Erfassung der Vibrationen, die beim Betrieb der Werkzeugmaschine auftreten, umfasst. Wenn der Trennschleifer einen zweiten Beschleunigungssensor umfasst, können die von den beiden Beschleunigungssensoren erfassten Vibrationsdaten im Rahmen der Auswertung miteinander verglichen oder in Relation zueinander gesetzt werden. Tests haben gezeigt, dass die Vorsehung von zwei Beschleunigungssensoren die Genauigkeit, mit der ein Unwucht-Ereignis erkannt wird, weiter verbessern kann.

Es ist im Sinne der Erfindung bevorzugt, dass für ein Abschalten der Werkzeugmaschine Kriterien definiert werden. Diese Kriterien können beispielsweise eine Veränderung einer Vibrationshöhe und/oder einer Vibrationsfrequenz über einen gewissen Zeitraum betreffen. Dabei ist es vorteilhaft, wenn zwei Beschleunigungssensoren an der Werkzeugmaschine angebracht vorliegen, um den jeweiligen Wert der einzelnen Sensoren miteinander vergleichen bzw. referenzieren zu können.

Es ist im Sinne der Erfindung bevorzugt, dass der zweite Beschleunigungssensor an einem Trägerarm für das scheibenförmige Werkzeug angeordnet vorliegt. Es ist im Sinne der Erfindung insbesondere bevorzugt, dass der zweite Beschleunigungssensor an einem hinteren Bereich des Trägerarms für das scheibenförmige Werkzeug angeordnet vorliegt. Dieser hintere Bereich des Schneidarms liegt im Übergang zwischen dem vorderen und dem hinteren Bereich der Werkzeugmaschine vor, mithin in räumlicher Nähe zu dem Bereich der Werkzeugmaschine, an dem der Schneidarm an dem Hauptkörper der Werkzeugmaschine befestigt ist. Durch die Erfassung von Vibrationsdaten an unterschiedlichen Orten durch die beiden bevorzugt voneinander beabstandet angeordneten Beschleunigungssensoren kann vorteilhafterweise eine noch genauere Erkennung einer Unwucht ermöglicht werden. Es ist im Sinne der Erfindung bevorzugt, dass eine gemeinsame Auswertung der Vibrationsdaten der Beschleunigungssensoren in der Steuereinheit erfolgt. Vorzugsweise besteht daher auch zwischen dem zweiten Beschleunigungssensor und der Steuereinheit eine Kommunikationsverbindung, welche drahtlos oder drahtbehaftet ausgebildet sein kann.

Nach einer Abschaltung des Trennschleifers aufgrund eines erkannten Unwucht-Ereignisses kann der Anwender die Trennscheibe prüfen und erforderlichenfalls austauschen. Anschließend kann mit dem Trennschleifer wie gewohnt weitergearbeitet werden.

Ein weiterer Vorteil, der mit der Erfindung verbunden ist, ist der, dass die Beschleunigungssensoren auch zur Erkennung eines Kick-Back-Ereignisses verwendet werden können. Bei einem Kick-Back verursacht eine klemmende oder verklemmte Trennscheibe einen unerwünschten und gefährlichen Rückschlag für den Anwender. Insofern stellt die Erfindung einen synergistischen Ansatz für einen breiten Anwenderschutz dar, mit dem der Anwender der Werkzeugmaschine sowohl vor Unwucht-, als auch vor Kick-Back-Ereignissen besonders wirksam geschützt werden kann.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:

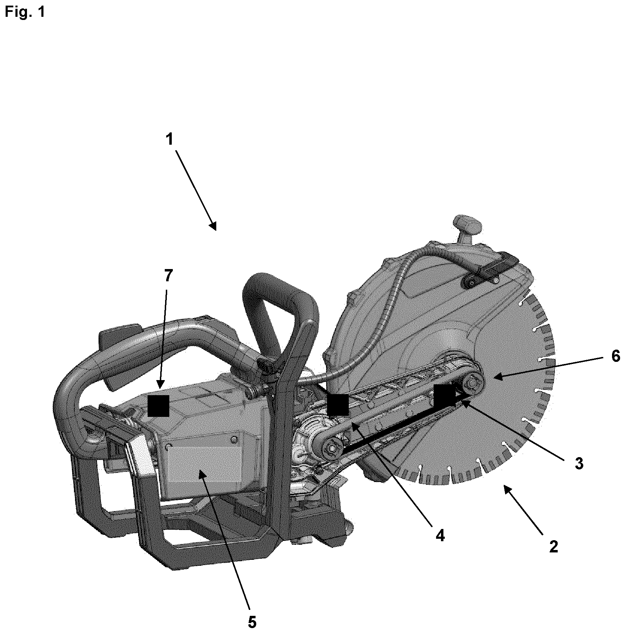

- Fig. 1: Ansicht einer bevorzugten Ausgestaltung der vorgeschlagenen Werkzeugmaschine

### Ausführungsbeispiele und Figurenbeschreibung:

Figur 1 zeigt eine mögliche bevorzugte Ausführungsform der vorgeschlagenen Werkzeugmaschine 1. Insbesondere wird ein Trennschleifer 1 dargestellt, der eine Trennscheibe 2 als scheibenförmiges Werkzeug 2 aufweist. Die Trennscheibe 2 bildet vorzugsweise einen vorderen Bereich der Werkzeugmaschine 1. Ein hinterer Bereich der Werkzeugmaschine 1 wird von einem Hauptkörper des Trennschleifers 1 gebildet, der insbesondere einen Motor 5 umfassen kann. Der Hauptkörper der Werkzeugmaschine 1 kann beispielsweise von einem Gehäuse umgeben sein und von einem Schutzrahmen geschützt werden.

Das scheibenförmige Werkzeug 2, das im vorderen Bereich des Trennschleifers 1 vorliegt, wird vorzugsweise von einem Träger- oder Schneidarm 6 gehalten. Es ist im Sinne der Erfindung bevorzugt, dass sich der Schneidarm 6 in die Raumrichtung «nach vorne» aus dem Hauptkörper des Trennschleifers 1 heraus erstreckt und über eine weite Strecke parallel zu der Trennscheibe 2 verläuft. In der Fig. 1 ist der Schneidarm 6 ohne Abdeckung gezeigt, um mögliche Anordnungen der Beschleunigungssensoren 3, 4 besser darstellen zu können.

Die Beschleunigungssensoren 3, 4 sind vorzugsweise am Schneidarm 6 des Trennschleifers 1 angeordnet. Es ist im Sinne der Erfindung bevorzugt, dass ein erster Beschleunigungssensor 3 in einem vorderen Bereich des Schneidarms 6 angeordnet vorliegt, während der zweite Beschleunigungssensor 4 an einem hinteren Bereich des Schneidarms 6 angeordnet vorliegt. Die Beschleunigungssensoren 3, 4 sind dazu eingerichtet, die Vibrationen, die bei Betrieb des Trennschleifers 1 entstehen, zu erfassen und an eine Steuereinheit (nicht abgebildet) der Werkzeugmaschine 1 weiterzuleiten. Vorzugsweise werden die erhobenen Vibrationsdaten in der Steuereinheit des Trennschleifers 1 ausgewertet, wobei die Werkzeugmaschine 1 schnellstmöglich abgeschaltet wird, wenn die ermittelten Vibrationswerte einen vorgegebenen Vibrationsgrenzwert überschreiten. Es ist im Sinne der Erfindung besonders bevorzugt, diejenigen Vibrationen auszuwerten, die im Bereich des Schneidarms 6 der Werkzeugmaschine 1 auftreten bzw. dort erfasst werden können. Das rasche Abschalten des Trennschleifers 1 kann beispielsweise dadurch erreicht werden, dass der Motor 5 des Trennschleifers 1 ausgeschaltet wird oder dadurch, dass die Trennscheibe 2 des Trennschleifers 1 von ihrem Antrieb bzw. vom Antrieb der Werkzeugmaschine 1 abgekoppelt bzw. entkoppelt wird. Für die Entkopplung kann die Werkzeugmaschine 1 beispielsweise eine Kupplung (nicht abgebildet) aufweisen. Darüber hinaus kann eine Rotation der Trennscheibe 2 gestoppt bzw. angehalten werden, wenn zu hohe Vibrationswerte gemessen werden. Dazu kann beispielsweise eine mechanische Bremse (nicht abgebildet) verwendet werden.

Die zu hohen Vibrationswerte, die erfindungsgemäß zu einem Abschalten des Trennschleifers 1 führen, können insbesondere durch eine defekte Trennscheibe 2 verursacht werden. Wie in Fig. 1 gut zu erkennen ist, weist die Trennscheibe 2 an ihrem Umfang Segmente auf, die durch Schlitze voneinander getrennt sind. Während des Betriebs des Trennschleifers 1 kann ein solches Segment aus der Trennscheibe 2 herausbrechen. Der Ausbruch eines solchen Trennscheibensegments kann zu erhöhten Vibrationen, sowie einem Unwucht-Ereignis führen, wobei dies zu einer Gefahr für den Anwender des Trennschleifers 1 führen kann. Durch das schnellstmögliche Abschalten des Trennschleifers 1, wenn zu hohe Vibrationswerte und damit ein mögliches Unwucht-Ereignis erkannt werden, kann diese Gefahr für den Anwender vorteilhafterweise erheblich reduziert werden. Die zu hohen Vibrationswerte sind insbesondere dadurch gekennzeichnet, dass sie einen vorgegebenen Grenzwert überschreiten, der innerhalb des Trennschleifers 1 oder außerhalb des Trennschleifers 1 hinterlegt sein kann.

Der Trennschleifer 1 kann darüber hinaus Anzeigemittel 7 aufweisen, mit denen der Anwender auf ein mögliches Unwucht-Ereignis bzw. ein Abschalten des Trennschleifers 1 hingewiesen wird. Die Anzeigemittel 7 können beispielsweise ein Display, einen Bildschirm, LEDs und/oder eine LED-Anzeige umfassen, ohne darauf beschränkt zu sein.

### Bezugszeichenliste

- 1: Werkzeugmaschine
- 2: scheibenförmiges Werkzeug
- 3: erster Beschleunigungssensor
- 4: zweiter Beschleunigungssensor
- 5: Motor
- 6: Trägerarm/Schneidarm
- 7: Anzeigemittel

## Patentansprüche

1. Verfahren zum Schutz eines Anwenders einer Werkzeugmaschine (1) vor Auswirkungen einer plötzlich auftretenden Unwucht
**gekennzeichnet durch die folgenden Verfahrensschritte:**
a) Bereitstellung einer Werkzeugmaschine (1) mit einem scheibenförmigen Werkzeug (2), wobei die Werkzeugmaschine (1) mindestens einen Beschleunigungssensor (3) umfasst,
b) Betrieb der Werkzeugmaschine (1),
c) Erfassung von Vibrationen, die beim Betrieb der Werkzeugmaschine (1) auftreten, mit dem mindestens einen Beschleunigungssensor (3),
d) Auswertung der unter Verfahrensschritt c) erfassten Vibrationen, wobei die Auswertung einen Vergleich der Vibrationswerte mit einem vorgegebenen Grenzwert für die Vibrationen umfasst,
e) Schutz des Anwenders durch ein Abschalten der Werkzeugmaschine (1), wenn die Vibrationswerte den vorgegebenen Grenzwert überschreiten.

2. Verfahren nach Anspruch 1,
**dadurch gekennzeichnet, dass**
das Abschalten der Werkzeugmaschine (1) durch ein Abschalten eines Motors (5) der Werkzeugmaschine (1) bewirkt wird.

3. Verfahren nach Anspruch 1 oder 2,
**dadurch gekennzeichnet, dass**
das Abschalten der Werkzeugmaschine (1) durch ein Anhalten des scheibenförmigen Werkzeugs (2) der Werkzeugmaschine (1) bewirkt wird, wobei zum Anhalten des scheibenförmigen Werkzeugs (2) an einem Antriebsstrang der Werkzeugmaschine (1) eine mechanische Bremse vorgesehen ist.

4. Verfahren nach einem der vorhergehenden Ansprüche,
**dadurch gekennzeichnet, dass**
das Abschalten der Werkzeugmaschine (1) durch eine Entkopplung des scheibenförmigen Werkzeugs (2) von einem Antrieb der Werkzeugmaschine (1) bewirkt wird, wobei zur Entkopplung des scheibenförmigen Werkzeugs (2) eine Kupplung an der Werkzeugmaschine (1) vorgesehen ist.

5. Verfahren nach einem der vorhergehenden Ansprüche,
**dadurch gekennzeichnet, dass**
der vorgegebene Grenzwert für die Vibrationen in der Werkzeugmaschine (1) oder außerhalb der Werkzeugmaschine (1) hinterlegt ist.

6. Verfahren nach einem der vorhergehenden Ansprüche,
**dadurch gekennzeichnet, dass**
eine Änderung der Vibrationsdaten durch eine Unwucht des scheibenförmigen Werkzeugs (2) der Werkzeugmaschine (1) hervorgerufen wird.

7. Werkzeugmaschine (1) mit einem scheibenförmigen Werkzeug (2)
**dadurch gekennzeichnet, dass**
die Werkzeugmaschine (1) mindestens einen Beschleunigungssensor (3) zur Erfassung von Vibrationen, die beim Betrieb der Werkzeugmaschine (1) auftreten, umfasst.

8. Werkzeugmaschine (1) nach Anspruch 7
**dadurch gekennzeichnet, dass**
der Beschleunigungssensor (3) so an der Werkzeugmaschine (1) angeordnet vorliegt, dass die Vibrationen, die beim Betrieb der Werkzeugmaschine (1) auftreten, optimal erfasst werden.

9. Werkzeugmaschine (1) nach Anspruch 7 oder 8
**dadurch gekennzeichnet, dass**
der Beschleunigungssensor (3) an einem Trägerarm (6) für das scheibenförmige Werkzeug (2) angeordnet vorliegt.

10. Werkzeugmaschine (1) nach einem der Ansprüche 7 bis 9
**dadurch gekennzeichnet, dass**
ein Motor (5) der Werkzeugmaschine (1) ein bürstenloser Motor ist.

11. Werkzeugmaschine (1) nach einem der Ansprüche 7 bis 10
**dadurch gekennzeichnet, dass**
die Werkzeugmaschine (1) ein Trennschleifer ist.

12. Werkzeugmaschine (1) nach einem der Ansprüche 7 bis 11
**dadurch gekennzeichnet, dass**
die Werkzeugmaschine (1) einen Akkumulator als Energiequelle umfasst.

13. Werkzeugmaschine (1) nach einem der Ansprüche 7 bis 12
**dadurch gekennzeichnet, dass**
die Werkzeugmaschine (1) ein Anzeigemittel (7) aufweist, um einen Anwender der Werkzeugmaschine (1) auf ein Abschalten hinzuweisen.

14. Werkzeugmaschine (1) nach einem der Ansprüche 7 bis 13
**dadurch gekennzeichnet, dass**
die Werkzeugmaschine (1) einen zweiten Beschleunigungssensor (4) zur Erfassung der Vibrationen, die beim Betrieb der Werkzeugmaschine (1) auftreten, umfasst.

15. Werkzeugmaschine (1) nach Anspruch 14
**dadurch gekennzeichnet, dass**
der zweite Beschleunigungssensor (4) an einem Trägerarm (6) für das scheibenförmige Werkzeug (2) angeordnet vorliegt.
